# EUROPÄISCHE PATENTSCHRIFT

(11) **EP 3 198 169 B1**
(45) Veröffentlichungstag und Bekanntmachung des Hinweises auf die Patenterteilung: **24.05.2023**
(21) Anmeldenummer: 15763828.9
(22) Anmeldetag: 20.08.2015
(51) Int. Cl.: F16F 15/123, F16F 15/14

(54) **KUPPLUNGSSCHEIBE MIT EINEM DREHSCHWINGUNGSDÄMPFER**
CLUTCH DISK WITH A TORSIONAL VIBRATION DAMPER
DISQUE D'EMBRAYAGE MUNI D'UN AMORTISSEUR DES VIBRATIONS DE TORSION

(30) Priorität: 24.09.2014 DE 102014219271
(43) Veröffentlichungstag der Anmeldung: 02.08.2017
(60) Teilanmeldung: 21200905.4
(73) Patentinhaber: Schaeffler Technologies AG & Co. KG, 91074 Herzogenaurach (DE)
(72) Erfinder: RUSCH, Alain, F-67760 Gambsheim (FR); LEHMANN, Steffen, 76275 Ettlingen (DE)
(86) Internationale Anmeldenummer: PCT/DE2015/200442
(87) Internationale Veröffentlichungsnummer: WO 2016/045671

(56) Entgegenhaltungen:
- EP-A2- 2 706 262
- DE-A1-102008 057 648
- DE-A1-102014 202 138
- US-A- 5 433 666

## Beschreibung

Die Erfindung betrifft eine Kupplungsscheibe mit einem Drehschwingungsdämpfer, insbesondere für den Antriebsstrang eines Kraftfahrzeugs.

Drehschwingungsdämpfer, auch Torsionsschwingungsdämpfer genannt, sind im Stand der Technik vielfältig bekannt. Dabei sind auch solche Drehschwingungsdämpfer bekannt geworden, bei welchen ein Fliehkraftpendel eingesetzt wird, bei welchen an einem Flansch Fliehgewichte verlagerbar angeordnet sind, welche bei Drehschwingungen Energie aufnehmen und zeitversetzt wieder abgeben, so dass die Drehschwingung dadurch gedämpft wird. Dabei sind die an dem Flansch verlagerbar angeordneten Fliehgewichte mittels Rollenelementen an dem Flansch verlagerbar angeordnet, wobei sowohl der Flansch als auch das jeweilige Fliehgewicht Führungsbahnen aufweisen, in welche die Rollenelemente als Lagerelemente eingreifen.

Auch sind Drehschwingungsdämpfer in Kupplungsscheiben bekannt geworden, bei welchen radial innen eine Nabe mit einer Innenverzahnung für den Kraftschluss mit einer Getriebeeingangswelle vorgesehen ist. Radial außen weist die Kupplungsscheibe Reibbeläge auf, die in Reibkontakt zwischen einer Druckplatte und einer Gegendruckplatte einer Kupplung angeordnet wird, um Drehmoment übertragen zu können. Bei solchen Kupplungsscheiben ist zwischen den Reibbelägen und der Nabe ein Federdämpfer angeordnet, welcher ein Drehmoment von den Reibbelägen über zwei benachbart angeordnete Deckbleche auf eine Feder überträgt und das Drehmoment von der Feder auf einen Flansch übertragen wird, welcher mit der Nabe verbunden ist. Bei solchen Kupplungsscheiben kann der Flansch auch mit einer Verzahnung mit der Nabe verbunden sein, so dass ein gewisser Verdrehwinkel Spiel zwischen dem Flansch und der Nabe besteht, welches entgegen der Rückstellkraft eines Vordämpfers mit entsprechend weicher Federstufe überbrückt werden kann. Ist das eingeleitete Drehmoment kleiner als das Endmoment des Vordämpfers, so dämpft der Vordämpfer mit einer weichen Kennlinie und geringer Hysterese die vorliegenden Drehschwingungen. Ist das anstehende Drehmoment größer als das Endmoment des Vordämpfers, so geht dieser auf Block und der als Hauptdämpfer ausgelegte Federdämpfer dämpft die Drehschwingungen.

Wird bei einer solchen Kupplungsscheibe zusätzlich ein Fliehkraftpendel als Schwingungstilger eingesetzt, so ist es bekannt, dass der Flansch des Fliehkraftpendels drehfest mit der Nabe verbunden ist und die Fliehgewichte an dem Flansch verlagerbar angeordnet sind.

In Betriebssituationen des schnellen Einkuppelns bei nicht eingelegtem Gang erfolgen ein ruckartiges Aufziehen der weichen Federn des Vordämpfers und ein starkes Beschleunigen der Getriebeeingangswelle und aller mit ihr spielbehaftet verbundenen Getriebeelemente. Das nach dem ersten Schlag folgende Ausschwingen der Getriebeeingangswelle und aller mit ihr spielbehaftet verbundenen Getriebeelemente führt zu mehreren Anschlägen und unter Umständen zu störenden metallischen Geräuschen im Getriebe. Dieses Phänomen ist auch als sogenannter Einkuppelschlag bekannt.

Bei den bisher bekannten Kupplungsscheiben mit Drehschwingungsdämpfern konnten Maßnahmen im Federdämpfer, wie daran angepasste Feder- und Reibungsdämpferelemente, vorgesehen werden, um den Einkuppelschlag und die damit verbundenen Geräusche auf ein akzeptables Niveau zu reduzieren.

Das oben beschriebene Fliehkraftpendel, welches mit seinem Flansch mit der Nabe verbunden ist, erhöht allerdings das Massenträgheitsmoment der Getriebeeingangswelle. Dies bewirktallerdings, dass der Einkuppelschlag derart verschlechtert wird, dass in einigen Anwendungsfällen selbst mit Maßnahmen im Federdämpfer keine zufriedenstellende Akustik mehr erreicht werden kann.

Aus der EP 2 706 262 A2 und der DE 10 2008 057 648 A1 sind nasslaufende Kupplungen mit Eingangs- und Ausgangslamellen, jeweils zwei Dämpfern und jeweils einem Fliehkraftpendel bekannt. US5433666 offenbart die Merkmale des Oberbegriffes des Anspruchs 1.

Es ist die Aufgabe der vorliegenden Erfindung, eine Kupplungsscheibe mit einem-Drehschwingungsdämpferzu schaffen, welche insbesondere bei Betriebssituationen, die zu einem Einkuppelschlag führen können, verbessert ist.

Die Aufgabe der Erfindung wird mit den Merkmalen von Anspruch 1 gelöst.

Ein Ausführungsbeispiel der Erfindung betrifft eine Kupplungsscheibe mit einem Drehschwingungsdämpfer mit zwei in Reihe geschalteten Federdämpfern und mit einem Fliehkraftpendel, mit einer Nabe und darauf angeordnetem Flansch, wobei beiderseits des Flanschs Seitenscheiben angeordnet sind, wobei radial außen die Seitenscheibe mit Reibbelägen verbunden sind, wobei der erste Federdämpfer als Hauptdämpfer zwischen den Seitenblechen und dem Flansch drehmomentübertragend angeordnet ist und der zweite Federdämpfer als Vordämpfer zwischen dem Flansch und der Nabe drehmomentübertragend angeordnet ist, wobei das Fliehkraftpendel zumindest einen Flansch und daran verlagerbar angeordnete Fliehgewichte aufweist, wobei der zumindest eine Flansch des Fliehkraftpendels in Momentenrichtung betrachtet vor dem zweiten Federdämpfer, wie Vordämpferstufe, an ein Element der Kupplungsscheibe angelenkt ist. Dadurch wird erreicht, dass das Fliehkraftpendel von der Nabe entkoppelt wird und das Gesamtmassenträgheitsmoment der Getriebeeingangswelle wieder auf den Stand einer konventionellen Kupplungsscheibe ohne Fliehkraftpendel reduziert wird, was die akustischen Eigenschaften verbessert.

Dabei ist es bei einem Ausführungsbeispiel vorteilhaft, wenn der zumindest eine Flansch des Fliehkraftpendels mit dem Flansch der Kupplungsscheibe verbunden ist. Dadurch wird eine feste Kopplung zwischen den beiden Flanschen erreicht und die Entkopplung von der Nabe ist dauerhaft gegeben.

Dabei ist es bei einem Ausführungsbeispiel vorteilhaft, wenn der zumindest eine Flansch des Fliehkraftpendels mit zumindest einer der Seitenscheiben der Kupplungsscheibe verbunden ist. Auch dadurch wird eine feste Kopplung zwischen dem Flansch des Fliehkraftpendels und den Seitenscheiben erreicht und die Entkopplung von der Nabe ist dauerhaft gegeben.

Gemäß des Erfindungsgedankens ist es alternativ zweckmäßig, wenn eine momentenrichtungsabhängige Einleitung des Pendelmomentes derart erfolgt, dass der Flansch des Fliehkraftpendels über Federn eines Federdämpfers im Zugbetrieb mit dem Flansch der Kupplungsscheibe gekoppelt ist und im Schubbetrieb mit den Seitenblechen der Kupplungsscheibe gekoppelt ist. Dadurch kann je nach Momentenrichtung die Lokalisierung der Anlenkung wechseln, wobei die Anlenkung dauerhaft von der Nabe getrennt ist.

Auch ist es zweckmäßig, wenn mit zumindest einem Flansch des Fliehkraftpendels ein Zwischenelement verbunden ist, welches Nasen aufweist, die axial zwischen den Federn des Federdämpfers und dem Flansch bzw. den Seitenscheiben eingreifen. So kann die wechselnde Anlenkung einfach realisiert werden, weil die Abstützung vom Schubbetrieb zum zugbetrieb wechselt.

Auch ist es vorteilhaft, wenn mit zumindest einem Flansch des Fliehkraftpendels Nasen verbunden oder einteilig ausgebildet sind, die axial zwischen den Federn des Federdämpfers und dem Flansch bzw. den Seitenscheiben eingreifen. Auch dies ist eine alternative, welche den Wechsel der Anlenkung erlaubt, wobei damit ein Bauteil vorteilhaft eingespart werden kann.

Besonders vorteilhaft ist es, wenn zumindest ein Flansch des Fliehkraftpendels auf der Nabe axial gesichert aber verdrehbar aufgenommen ist.

Auch ist es vorteilhaft, wenn der zumindest eine Flansch mittels eines Sicherungsrings, eines Haltebolzens oder eines Halteblechs auf der Nabe verdrehbar aber axial gesichert gehalten ist.

Auch ist es besonders vorteilhaft, wenn der zumindest eine Flansch des Fliehkraftpendels mit dem Flansch der Kupplungsscheibe oder mit zumindest einer der Seitenscheiben der Kupplungsscheibe mittels eines Abstandsbolzens oder Abstandsblechs verbunden ist.

Weiterhin ist es alternativ vorteilhaft, wenn das Fliehkraftpendel zwei beabstandete Flansche und dazwischen angeordnete Fliehgewichte oder einen Flansch und beiderseits davon angeordnete Fliehgewichte aufweist. Dadurch kann je nach Ausführung und Bauraum die eine oder die andere Variante vorgesehen sein.

Die vorliegende Erfindung wird nachfolgend anhand bevorzugter Ausführungsbeispiele in Verbindung mit den zugehörigen Figuren näher erläutert:

Dabei zeigen:
- Figur 1: eine schematische Darstellung einer Kupplungsscheibe nach dem Stand der Technik in einem Halbschnitt,
- Figur 2: ein Diagramm mit einer beispielhaften Kennlinie des Drehschwingungsdämpfers der Kupplungsscheibe nach Figur 1,
- Figur 3: eine Ersatzschaltbild für die Kupplungsscheibe nach Figur 1,
- Figur 4: eine schematische Darstellung einer erfindungsgemäßen Kupplungsscheibe in einem Halbschnitt,
- Figur 5: ein Diagramm mit einer beispielhaften Kennlinie des Drehschwingungsdämpfers der Kupplungsscheibe nach Figur 4,
- Figur 6: eine schematische Darstellung eines Details eines weiteren Ausführungsbeispiels einer Kupplungsscheibe,
- Figur 7: eine schematische Darstellung eines Details eines weiteren Ausführungsbeispiels einer Kupplungsscheibe,
- Figur 8: eine schematische Darstellung eines Details eines weiteren Ausführungsbeispiels einer Kupplungsscheibe,
- Figur 9: eine schematische Darstellung eines Fliehkraftpendels in Seitenansicht,
- Figur 10: eine schematische Darstellung eines Fliehkraftpendels im Schnitt,
- Figur 11: eine schematische Teildarstellung eines Fliehkraftpendels im Schnitt,
- Figur 12: eine schematische perspektivische Darstellung eines Fliehkraftpendels,
- Figur 13: eine Kupplungsscheibe im Schnitt in Ruhelage,
- Figur 14: eine Teildarstellung der Kupplungsscheibe nach Figur 13 in Seitenansicht,
- Figur 15: eine Kupplungsscheibe im Schnitt im Zugbetrieb,
- Figur 16: eine Teildarstellung der Kupplungsscheibe nach Figur 15 in Seitenansicht,
- Figur 17: ein Ersatzschaltbild zur Kupplungsscheibe nach Figur 15,
- Figur 18: eine Kupplungsscheibe im Schnitt im Schubbetrieb,
- Figur 19: eine Teildarstellung der Kupplungsscheibe nach Figur 18 in Seitenansicht,
- Figur 20: ein Ersatzschaltbild zur Kupplungsscheibe nach Figur 18,
- Figur 21: eine Explosionsdarstellung der Kupplungsscheibe mit Fliehkraftpendel,
- Figur 22: eine alternativ Kupplungsscheibe im Schnitt,
- Figur 23: eine weitere alternative Kupplungsscheibe im Schnitt, und
- Figur 24: ein Ersatzschaltbild zur Kupplungsscheibe nach Figur 22 bzw. 23.

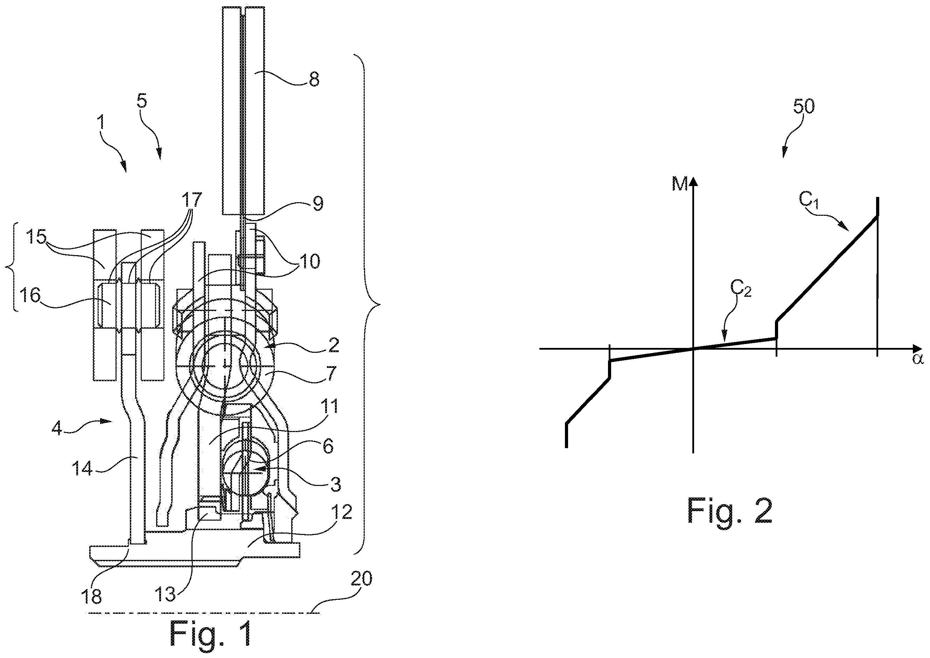

Die Figur 1 zeigt eine Kupplungsscheibe 1 nach dem Stand der Technik in einem Halbschnitt. Dabei ist die Kupplungsscheibe 1 bezüglich der Drehachse 20 verdrehbar dargestellt, bezüglich welcher auch die axiale bzw. die radiale Richtung bzw. die Umfangsrichtung definiert ist. Die axiale Richtung ist dabei entlang der Drehachse 20, die radiale Richtung erstreckt sich in einer Richtung senkrecht zur Drehachse 20 und die Umfangsrichtung definiert sich entsprechend in einer Bahn um die Drehachse 20 herum. Dies gilt nachfolgend entsprechend auch für die Darstellungen in den weiteren Figuren.

Die Figur 2 zeigt in einem Diagramm eine dazugehörige Drehmomentkennlinie 50 des Drehschwingungsdämpfers der Kupplungsscheibe 1. In dem Diagramm ist das Drehmoment M über dem Verdrehwinkel α aufgetragen.

Dabei ist auf der Kupplungsscheibe 1 ein Dämpfer aus zwei in Reihe geschalteten Federdämpfern 2, 3 vorgesehen, einem als Hauptdämpfer vorgesehenen ersten Federdämpfer 2 und einem als Vordämpfer vorgesehenen zweiten Federdämpfer 3. Weiterhin ist auf der Kupplungsscheibe ein Fliehkraftpendel4 als weiterer Schwingungstilger vorgesehen. Der Drehschwingungsdämpfer 5 der Kupplungsscheibe 1 wird damit also durch die beiden Federdämpfer 2, 3 und das Fliehkraftpendel4 bewirkt.

Der als Vordämpfer ausgestaltete Federdämpfer 3 weist als erste Stufe eine niedrige Federsteifigkeit c2 der eingesetzten Federn 6 und eine niedrige Reibung auf. Der zweite Federdämpfer 3 wirkt dabei bei niedrigen Drehmomenten, wie beispielsweise in Betriebssituationen des Creeping oder im Leerlauf.

Der als Hauptdämpfer ausgestaltete Federdämpfer 2 weist als zweite Stufe eine Federsteifigkeit c1 der eingesetzten Federn 7 auf, der erst nach Überschreitung eines bestimmten Drehmomentes betätigt wird. Der als Hauptdämpfer ausgebildete Federdämpfer 2 dient der Dämpfung von Drehschwingungen mit höheren Drehmomenten, wie beispielsweise bei einem Betrieb im Teillast- oder Volllastbereich. Die Federkennlinie des Hauptdämpfers ist steiler und er ist mit einer höheren Reibung ausgestattet.

Der Drehmomentfluss verläuft von den zwischen einem Schwungrad eines Verbrennungsmotors bzw. einer Gegendruckplatte und einer Druckplatte einer Kupplung reibschlüssig verspannten Reibbelägen 8 über mit den Reibbelägen 8 verbundene Axialfederelementen 9 auf die miteinander verbundenen, wie vernieteten, Seitenbleche 10. Das Drehmoment wird von den Seitenblechen 10 über die Federn 7 mit der Federsteifigkeit c1 auf einen Flansch 11 übertragen.

Bei niedrigen Drehmomenten, wie beispielsweise beim Creeping oder im Leerlauferfolgt die Übertragung des Drehmoments vom Flansch 11 über die Federn 6, wie beispielsweise Druckfedern, mit der Steifigkeit c2,des Vordämpfers auf die Nabe 12. Bei höheren Drehmomenten, beispielsweise im Teillastbetrieb oder im Volllastbetrieb wird der Vordämpfer überbrückt und die Drehmomentübertragung erfolgt über eine Verzahnung 13 vom Flansch 11 direkt auf die Nabe 12.

Die Kupplungsscheibe 1 weist weiterhin das Fliehkraftpendel 4 auf, das im Wesentlichen aus einem Flansch 14 und daran verlagerbar angeordneten Fliehgewichten 15 als Pendelmassen, die mittels vorgesehener Rollenelemente 16 als Pendelrollen an dem Flansch 14 geführt sind. Hierzu sind in den Fliehgewichten 15 und in dem Flansch 14 Führungsbahnen 17 vorgesehen, in welchen die Rollenelemente 16 eingreifen und die Bewegung der Fliehgewichte 15 relativ zum Flansch 14 führen. Der Flansch 14 des Fliehkraftpendels 4ist auf einem Absatz 18 der Nabe 12 der Kupplungsscheibe 1 aufgenommen und dort drehfest verbunden, wie beispielsweise verstemmt oder verschweißt o.ä. Damit ist der Flansch 14 mit der Nabe in Umfangsrichtung drehfest verbunden.

Das Fliehkraftpendel 4 dient der Reduzierung von Drehschwingungen, bei welchem auf einem rotierenden Teil, wie der Flansch 14 zusätzliche Massen, wie die Fliehgewichte 15, angebracht sind. Diese Massen führen im Feld der Zentrifugalbeschleunigung Schwingungen auf vorgegebenen Bahnen der Führungsbahnen 17 aus, wenn sie durch Drehzahlungleichförmigkeiten angeregt werden. Durch diese Schwingungen wird der Erregerschwingung zu passenden Zeiten Energie entzogen und wieder zugeführt, so dass es zu einer Beruhigung der Erregerschwingung kommt, das Fliehkraftpendel 4 also als Tilger wirkt.

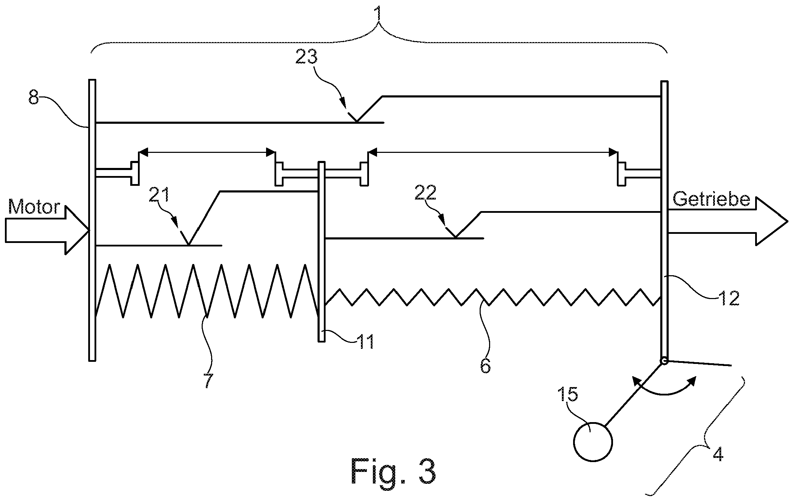

Die Figur 3 zeigt dafür ein Ersatzschaltbild, bei welchem die Elemente der Kupplungsscheibe schematisch dargestellt sind. Die Federn 7, 6 sind in Reihe geschaltet, wobei parallel zu den Federn 7, 6 jeweils eine Reibungseinrichtung 21, 22 vorgesehen ist, wobei auch parallel zu beiden Federn 7,6 die Reibungseinrichtung 23 vorgesehen ist. An der Nabe 12 ist das Fliehkraftpendel 4 angelenkt.

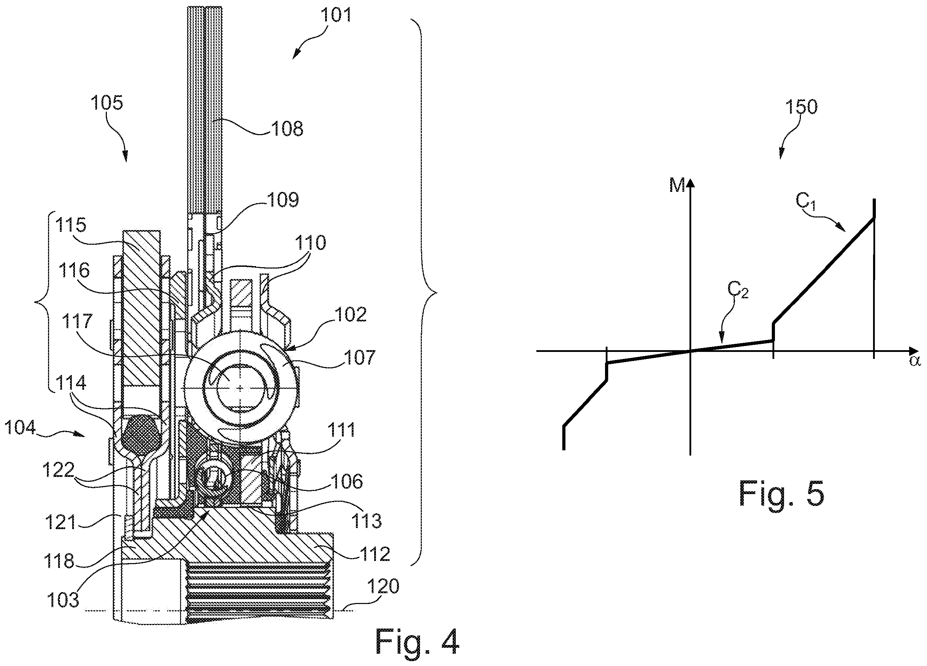

Die Figur 4 zeigt eine erfindungsgemäße Kupplungsscheibe 101, grundsätzlich entsprechend der Kupplungsscheibe1 der Figur 1, wobei das Fliehkraftpendel 104 verändert ausgebildet ist. Die Kupplungsscheibe 101 ist in einem Halbschnitt. Dabei ist die Kupplungsscheibe 101 bezüglich der Drehachse 120 verdrehbar dargestellt, bezüglich welcher auch die axiale bzw. die radiale Richtung bzw. die Umfangsrichtung definiert ist, siehe hierzu auch die Definition gemäß Figur 1.

Die Figur 5 zeigt in einem Diagramm eine dazugehörige Drehmomentkennlinie 150 des Drehschwingungsdämpfers der Kupplungsscheibe 1. In dem Diagramm ist das Drehmoment M über dem Verdrehwinkel α aufgetragen.

Auf der Kupplungsscheibe 101 ist ein Dämpfer aus zwei in Reihe geschalteten Federdämpfern 102, 103 vorgesehen, einem als Hauptdämpfer vorgesehenen ersten Federdämpfer 102 und einem als Vordämpfer vorgesehenen zweiten Federdämpfer 103. Weiterhin ist auf der Kupplungsscheibe ein Fliehkraftpendel 104 als weiterer Schwingungstilger vorgesehen. Der Drehschwingungsdämpfer 105 der Kupplungsscheibe 101 wird damit also durch die beiden Federdämpfer 102, 103 und das Fliehkraftpendel 104 bewirkt. Der als Vordämpfer ausgestaltete Federdämpfer 103 weist als erste Stufe eine niedrige Federsteifigkeit c2 der eingesetzten Federn 106 und eine niedrige Reibung auf. Der zweite Federdämpfer 103 wirkt dabei bei niedrigen Drehmomenten, wie beispielsweise in Betriebssituationen des Creeping oder im Leerlauf. Der als Hauptdämpfer ausgestaltete Federdämpfer 102 weist als zweite Stufe eine Federsteifigkeit c1 der eingesetzten Federn 107 auf, der erst nach Überschreitung eines bestimmten Drehmomentes betätigt wird. Der als Hauptdämpfer ausgebildete Federdämpfer 102 dient der Dämpfung von Drehschwingungen mit höheren Drehmomenten, wie beispielsweise bei einem Betrieb im Teillast- oder Volllastbereich. Die Federkennlinie des Hauptdämpfers ist steiler und er ist mit einer höheren Reibung ausgestattet.

Der Drehmomentfluss verläuft von den zwischen einem Schwungrad eines Verbrennungsmotors bzw. einer Gegendruckplatte und einer Druckplatte einer Kupplung reibschlüssig verspannten Reibbelägen 108 über mit den Reibbelägen 108 verbundene Axialfederelemente109 auf die miteinander verbundenen, wie vernieteten, Seitenbleche 110. Das Drehmoment wird von den Seitenblechen 110 über die Federn 107 mit der Federsteifigkeit c1 auf einen Flansch 111 übertragen. Bei niedrigen Drehmomenten, wie beispielsweise beim Creeping oder im Leerlauf erfolgt die Übertragung des Drehmoments vom Flansch 111 über die Federn 106, wie beispielsweise Druckfedern, mit der Steifigkeit c2, des Vordämpfers auf die Nabe 112. Bei höheren Drehmomenten, beispielsweise im Teillastbetrieb oder im Volllastbetrieb wird der Vordämpfer überbrückt und die Drehmomentübertragung erfolgt über eine Verzahnung 113 vom Flansch 111 direkt auf die Nabe 112.

Die Kupplungsscheibe 101 weist weiterhin das Fliehkraftpendel 104 auf, das im Wesentlichen aus zwei parallel zueinander angeordneten Flanschen 114 und dazwischen verlagerbar angeordneten Fliehgewichten 115 als Pendelmassen, die mittels nicht dargestellter Rollenelemente als Pendelrollen an den Flanschen 14 geführt sind. Hierzu sind in den Fliehgewichten 115 und in den Flanschen 114 Führungsbahnen vorgesehen, in welchen die Rollenelemente eingreifen und die Bewegung der Fliehgewichte 115 relativ zu den Flanschen 114 führen.

Die Flansche 114 des Fliehkraftpendels 104 sind auf einem Absatz 118 der Nabe 112 der Kupplungsscheibe 101 aufgenommen und dort verdrehbar gelagert aufgenommen. Gegenüber der Kupplungsscheibe 1 nach Figur 1 wird das Rückstellmoment des Fliehkraftpendels 104 nicht mehr auf die Nabe 112 übertragen, da von den Flanschen 114 keine drehfeste Verbindung zur Nabe 112 besteht.

Die Verbindung zwischen dem Fliehkraftpendel 104 und der Kupplungsscheibe 101 bzw. zu den Federdämpfern 102, 103 erfolgt von den Flanschen 114 über ein Zwischenelement 116 auf axial in den Federdämpfer 102 eingreifende Nasen 117. Diese Nasen 117 werden tangential durch die Druckfedern 107 gegen den Nabenflansch 113 bzw. die Seitenbleche 110 gespannt.

Auf dem Absatz 118 sichert ein in einer Nut aufgenommener Wellensicherungsring 121 die Flansche 114 des Fliehkraftpendels 104 in axialer Richtung auf der Nabe 112.

Im Ausführungsbeispiel der Figur 4 reichen die Flansche 114 mit ihrem radial inneren Randbereich 122 jeweils bis zur Nabe 112.

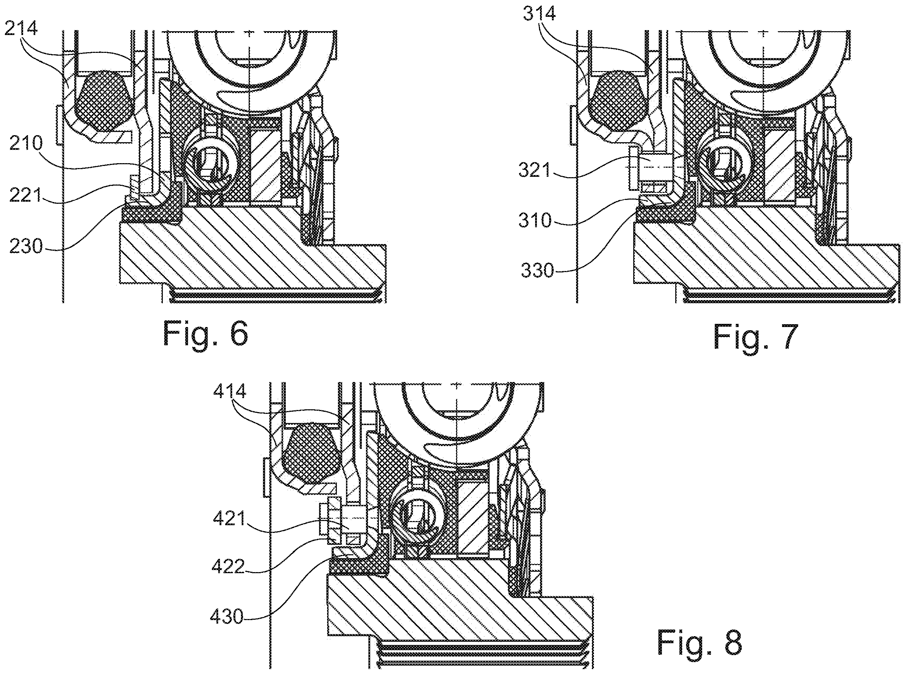

In den Figuren 6 bis 8 sind weitere Ausführungsbeispiele von Kupplungsscheiben mit vorteilhaften Abwandlungen dargestellt.

Gemäß Figur 6 kann die Axialsicherung und Grobzentrierung des Fliehkraftpendels und damit eines Flansches 214 über eines der Seitenbleche 210 und den Sicherungsring 221 erfolgen. Dazu ist das Seitenblech 210 radial innen L-förmig abgebogen, so dass ein in axialer Richtung vorstehender Schenkel 230 als Lager für den Flansch 214 dient. Auch ist zu erkennen, dass nur einer der Flansche 214 auf dem Schenkel 230 gelagert ist, während der andere Flansch radial weiter außen abgebogen ist und in Richtung auf den anderen auf dem Schenkel 230 gelagerten Flansch 214 zeigt.

Gemäß Figur 7 ist die Axialsicherung und Grobzentrierung des Fliehkraftpendels und damit eines Flanschs 314 ebenso über eines der Seitenbleche 310 und einen Sicherungsniet 321 ausgebildet. Dabei werden die Flansche 314 durch das Nietelement 321, das mit dem Seitenblech 310 vernietet ist, axial gehalten, sind jedoch in Umfangsrichtung zu diesem drehbar. Das Seitenblech 310 ist wiederum radial innen L-förmig abgebogen, so dass ein in axialer Richtung vorstehender Schenkel 330 als Zentrierung vorgesehen sein kann.

Gemäß Figur 8 ist die Axialsicherung und Grobzentrierung des Fliehkraftpendels und damit eines Flanschs 414 ebenso über eines der Seitenbleche 410 und einen Sicherungsniet 421 mit Halteblech 422 ausgebildet. Dabei greift das Nietelement 421 durch eine Öffnung im Flansch 414. Das mit dem Nietelement 421 verbundene Halteblech 422 verhindert das Entgleiten des Flanschs 414. Das Seitenblech 410 ist wiederum radial innen L-förmig abgebogen, so dass ein in axialer Richtung vorstehender Schenkel 430 als Zentrierung vorgesehen sein kann. Das Nietelement 421 dient dabei als Abstandsbolzen. Die beiden Flansche 414 sind dabei derart ausgebildet, dass ein Flansch 414 radial innen auf dem Schenkel 430 zentriert ist, während der andere Flansch 414 in axialer Richtung hin zu dem benachbarten Flansch abgewinkelt ist. Dadurch wird der Raum zur Vernietung frei gegeben.

Die in den Beispielen der Figuren 6 bis 8 gezeigten Elemente zur Zentrierung bzw. Lagerung der Flansche sind vorzugsweise aus Metall, wie aus Blech gestaltet, sie können jedoch auch aus Kunststoff vorgesehen sein, so dass damit auch eine mögliche Fremdreibung reduziert werden kann.

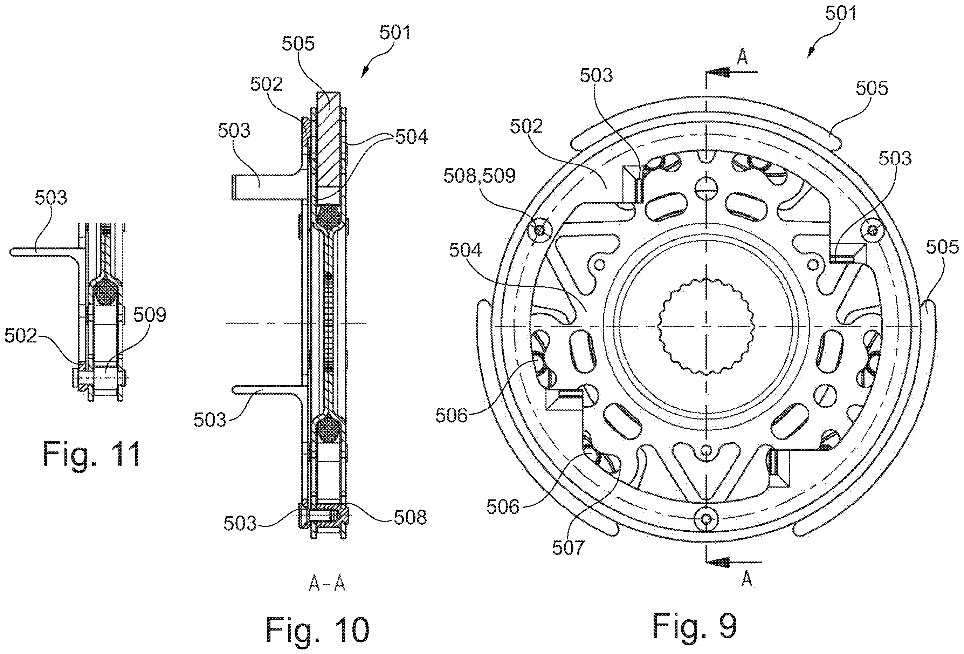

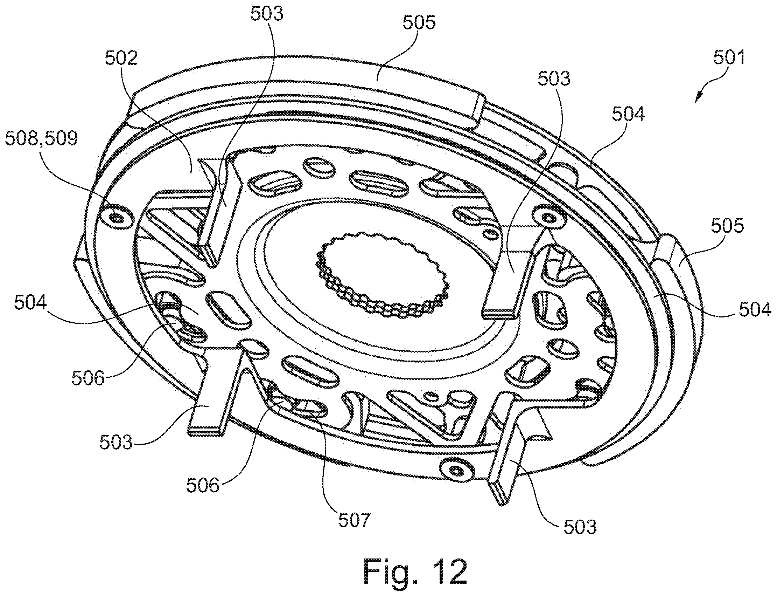

Die Figuren 9 bis 12 zeigen das Fliehkraftpendel 501 mit dem Zwischenelement 502 und den in axialer Richtung abstehenden Vorsprüngen bzw. Nasen 503. Dabei weist das Fliehkraftpendel 501 zwei benachbart angeordnete Flansche 504 auf, zwischen welchen die Fliehgewichte 505 verlagerbar angeordnet sind. Dabei sind ein Fliehgewichte 505 mit Rollenelementen 506 in den beiden Flanschen 504 verlagerbar geführt, wobei die Rollenelemente 506 in Führungsbahnen 507 von Flansch 504 und Fliehgewicht eingreifen. Das Zwischenelement 502 kann beispielsweise mittels Schrauben 508, vorzugsweise jedoch mittels Nieten 509 mit dem einen Flansch 504 oder mehreren Flanschen 504 verbunden sein. Die Nasen bzw. Vorsprünge sind dabei einteilig mit dem Zwischenelement 502 ausgebildet und ragen in axialer Richtung von dem Zwischenelement ab. Dabei ist in Figur 12 zu erkennen, dass die Nasen bzw. Vorsprünge 503 im Schnitt etwa rechteckig ausgebildet sind und zwei sich diametral gegenüberliegende Nasen 503 in die gleiche Richtung orientiert sind und die anderen Nasen dazu um 90° verdreht ausgerichtet sind.

Alternativ dazu könnte statt des Vorsehens des Zwischenelements 502 dieses auch in einen Flansch 504 integriert sein, oder die Nasen 503 bzw. Vorsprünge könnten direkt in den einen Flansch 504 integriert sein.

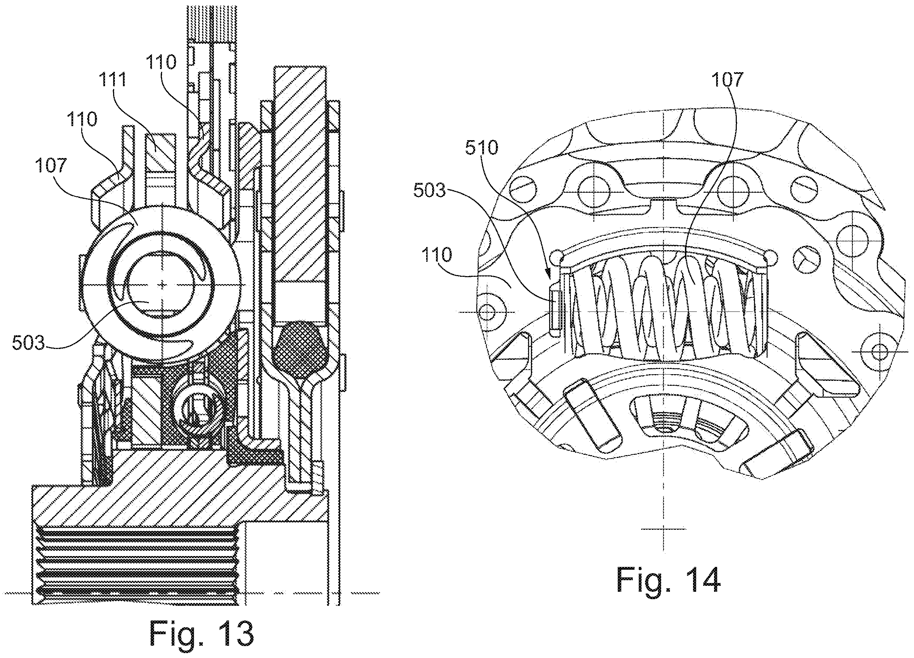

Die Figuren 13 und 14 zeigen die Kupplungsscheibe 101 nach Figur 4 in der Nulllage. Die Nasen 503 des Fliehkraftpendels 501 sind zwischen den Druckfedern 107 und den Seitenblechen 110 dem nur im Schnitt sichtbaren Nabenflansch 111 verspannt. Dazu liegt die Nase 503 an einer Schulter 510 des Seitenblechs 110 an, welches die Nase 503 gegen die Feder 107 beaufschlagt.

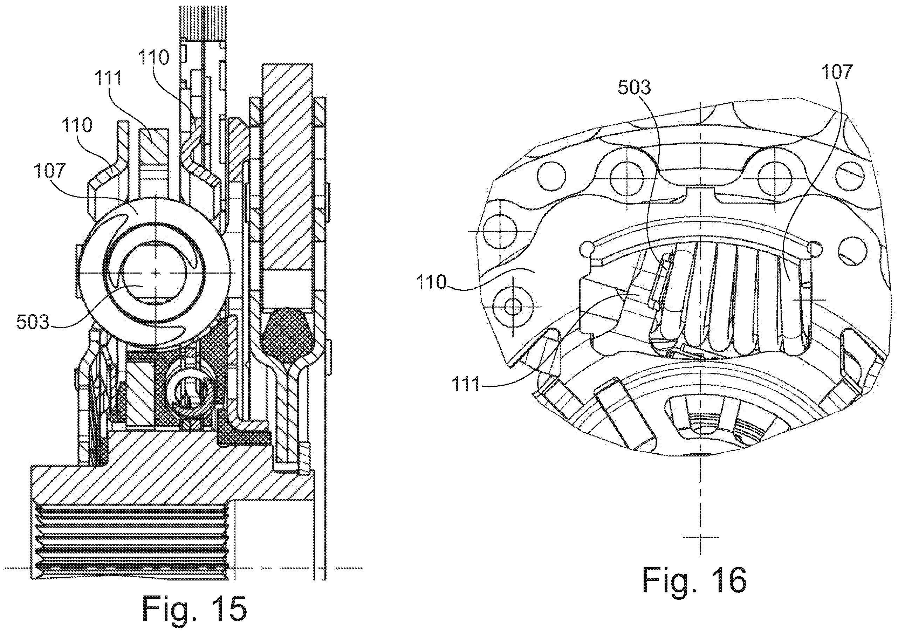

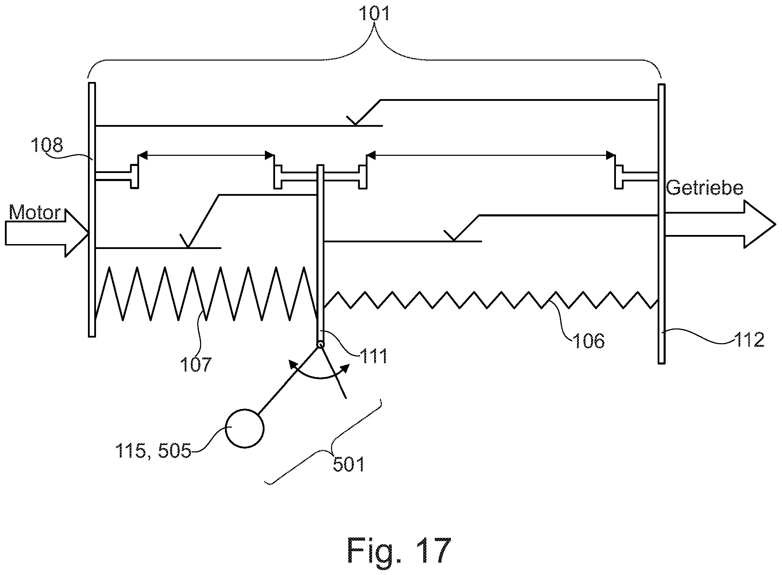

Die Figuren 15 und 16 zeigen die Kupplungsscheibe 101 nach Figur 4 im Zugbetrieb, bei welchem der Motor des Fahrzeugs das Fahrzeug antreibt. Die Nasen 503 des Fliehkraftpendels 501 sind zwischen den Druckfedern 107 und dem zu den Seitenblechen 110 verdrehten Nabenflansch 111 verspannt. Das Fliehkraftpendel 501 ist in diesem Betriebszustand durch die Federkraft der Federn 107 drehfest mit dem Nabenflansch 111 verbunden. Die Figur 17 zeigt ein entsprechendes Ersatzschaltbild, bei welchem im Unterschied zur Figur 3 das Fliehkraftpendel nicht an der Nabe 112 sondern am Flansch 111 angelenkt ist.

Das Gesamtmassenträgheitsmoment der Getriebeeingangswelle wird somit wieder auf den Stand einer konventionellen Kupplungsscheibe ohne Fliehkraftpendel reduziert. Das Phänomen des Einkuppelschlags ist wieder auf ein vertretbares akustisches Niveau reduziert.

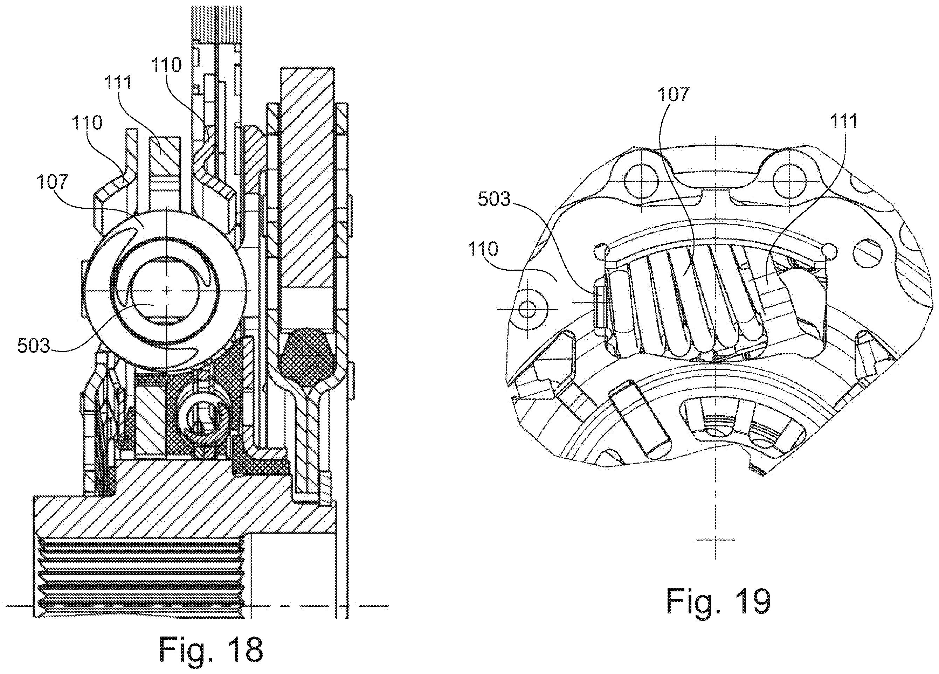

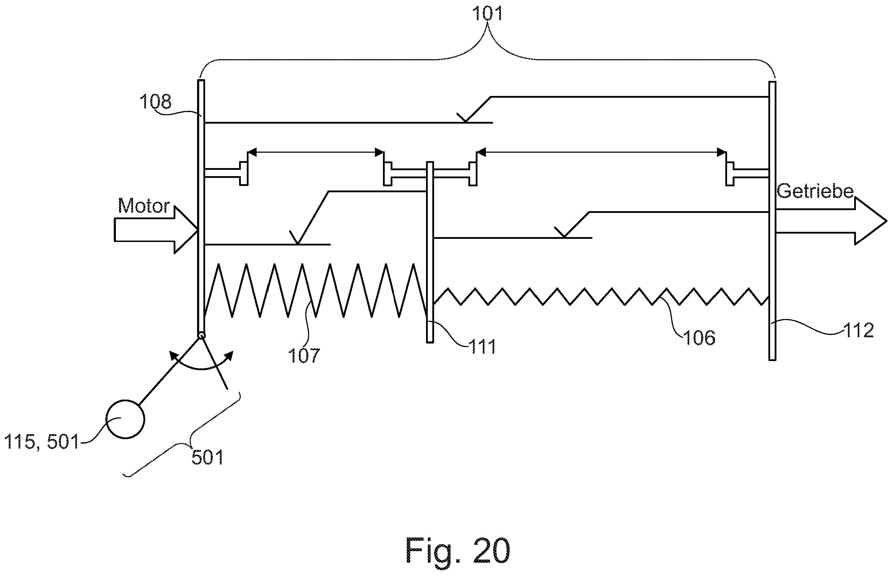

Die Figuren 18 und 19 zeigen die Kupplungsscheibe 101 nach Figur 4 im Schubbetrieb, wenn der Motor das Fahrzeug bremst. Die Nasen 503 des Fliehkraftpendels sind zwischen den Druckfedern 107 und den zum Nabenflansch 111 verdrehten Seitenblechen 110 verspannt. Das Fliehkraftpendel 501 ist in diesem Betriebszustand durch die Federkraft der Federn 107 drehfest mit den Seitenblechen 110 verbunden. Die Figur 20 zeigt das entsprechende Ersatzschaltbild. Gegenüber der Figur 3 ist das Fliehkraftpendel 501 im Schubbetrieb nicht mehr mit der Nabe 112 verbunden, sondern mit den Seitenblechen 110. Das Gesamtmassenträgheitsmomentes der Getriebeeingangswelle wird auch in diesem Zustand wieder auf den Stand einer konventionellen Kupplungsscheibe ohne Fliehkraftpendel reduziert.

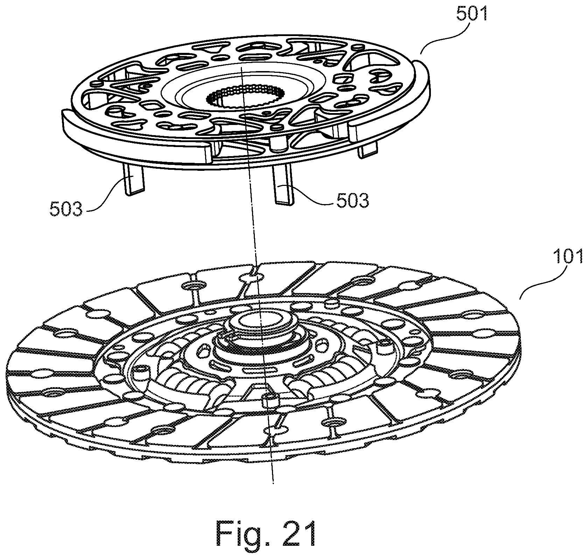

Die Figur 21 zeigt eine Explosionsdarstellung der erfindungsgemäßen Kupplungsscheibe 101 mit Fliehkraftpendel 501. Neben der momentrichtungsabhängigen Pendelfixierung zugseitig zum Flansch und schubseitig zu den Seitenblechen ist auch eine momentrichtungsunabhängige Fixierung als Variante möglich.

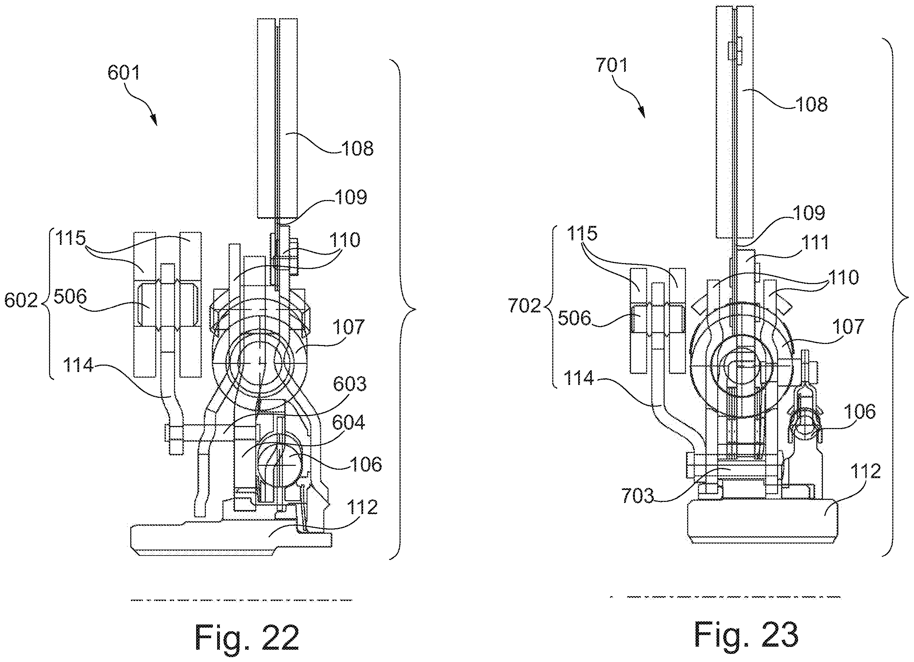

Die Figuren 22 und 23 zeigen jeweils ein solches Ausführungsbeispiel einer Kupplungsscheibe 601 bzw. 701. Dabei stellt die Kupplungsscheibe 601 eine Anwendung insbesondere für einen Personenkraftwagen und die Kupplungsscheibe 701 insbesondere eine Anwendung für einen Lastkraftwagen dar.

Das Fliehkraftpendel 602 der Kupplungsscheibe 601 ist über Abstandsbolzen 603 oder Abstandsbleche fest mit dem Nabenflansch 604 verbunden. Ein Positionswechsel der Anbindung des Fliehkraftpendels im Betrieb findet nicht statt.

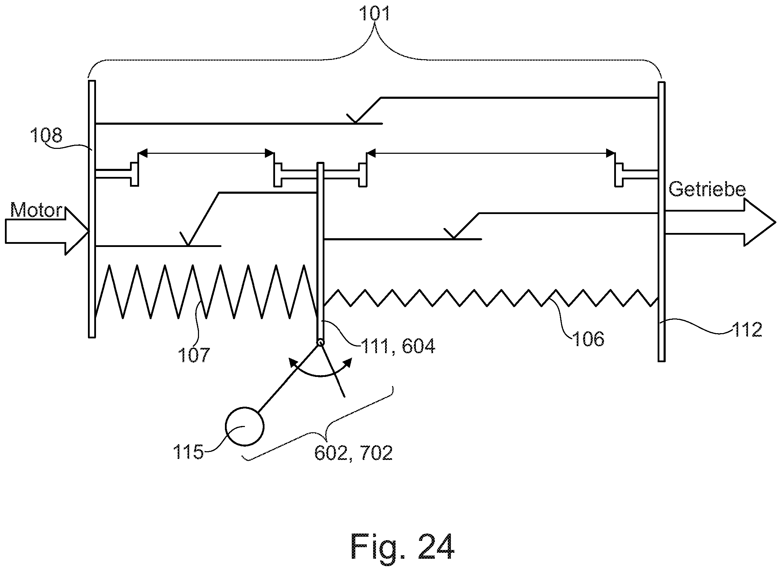

Das Fliehkraftpendel 702 der Kupplungsscheibe 701 ist über Abstandsbolzen 703 oder Abstandsbleche fest mit den Seitenblechen 110 verbunden. Ein Positionswechsel der Anbindung des Fliehkraftpendels 702 im Betrieb findet ebenfalls nicht statt. Bei diesem Konstruktionskonzept tauschen die Bauteile Flansch und Seitenbleche im Vergleich zum PKW-Design gemäß Figur 22 ihre Positionen. In beiden Varianten ergibt sich jedoch das gleiche Ersatzschaltbild. Dieses ist in Figur 24 dargestellt. Da das Fliehkraftpendel 602, 702 fest mit dem Bauteil 604, 110 verbunden ist, wechselt es seine Position in den beiden Zuständen Zug und Schub nicht mehr. Das Gesamtmassenträgheitsmoment der Getriebeeingangswelle wird somit auch hier wieder auf den Stand einer konventionellen Kupplungsscheibe ohne Fliehkraftpendel reduziert.

Die Kupplungsscheibe mit Fliehkraftpendel ist also derart ausgebildet, dass die Anordnung des Fliehkraftpendels nicht mehr drehfest auf der Nabe, sondern in Momentenrichtung betrachtet vor der Vordämpferstufe angelenkt ist.

Dabei erfolgt eine momentrichtungsabhängige Pendelfixierung, wobei die zugseitige Fixierung des Fliehkraftpendels zwischen Vordämpfer und Hauptdämpfer erfolgt und die schubseitige Fixierung des Fliehkraftpendels vor die Hauptdämpferstufe, insbesondere auf der Motorseite erfolgt.

Dabei erfolgt die momentrichtungsabhängige Einleitung des Pendelmomentes über durch Druckfedern zum Nabenflansch (Zug) bzw. den Seitenblechen (Schub) verspannte Mitnahmenasen, wobei das Fliehkraftpendel bzw. der Flansch des Fliehkraftpendels über eine nicht drehfeste aber axiale Fixierung des Flansches des Fliehkraftpendels entweder auf der Nabe oder einem der Seitenbleche erfolgt, wobei die Befestigung und Lagerung beispielsweise mittels eines Sicherungsrings, eines Haltebolzens oder eines Halteblechserfolgt.

Alternativ zur momentenrichtungsabhängigen Anlenkung kann auch eine momentrichtungsunabhängige Pendelfixierung vorgesehen sein, bei welcher die zug- und schubseitige Fixierung des Fliehkraftpendels bzw. des diesbezüglichen Flanschs zwischen Vordämpfer und Hauptdämpfer am Nabenflansch, beispielsweise als PKW-Design, über Abstandsbolzen oder -bleche erfolgt oder die zug- und schubseitige Fixierung des Fliehkraftpendels bzw. des diesbezüglichen Flanschs zwischen Vordämpfer und Hauptdämpfer an einer mit Seitenblechen verbundenen Zwischennabe, insbesondere beispielsweise als typisches LKW-Design, über Niete erfolgt.

### Bezugszeichenliste

- 1: Kupplungsscheibe
- 2: Federdämpfer
- 3: Federdämpfer
- 4: Fliehkraftpendel
- 5: Drehschwingungsdämpfer
- 6: Feder
- 7: Feder
- 8: Reibbelag
- 9: Axialfederelement
- 10: Seitenblech
- 11: Flansch
- 12: Nabe
- 13: Verzahnung
- 14: Flansch
- 15: Fliehgewicht
- 16: Rollenelement
- 17: Führungsbahn
- 18: Absatz
- 20: Drehachse
- 21: Reibungseinrichtung
- 22: Reibungseinrichtung
- 23: Reibungseinrichtung
- 50: Drehmomentkennlinie

- 101: Kupplungsscheibe
- 102: Federdämpfer
- 103: Federdämpfer
- 104: Fliehkraftpendel
- 105: Drehschwingungsdämpfer
- 106: Feder
- 107: Feder
- 108: Reibbelag
- 109: Axialfederelement
- 110: Seitenblech
- 111: Flansch
- 112: Nabe
- 113: Verzahnung
- 114: Flansch
- 115: Fliehgewicht
- 116: Zwischenelement
- 117: Nase, Vorsprung
- 118: Absatz
- 120: Drehachse
- 121: Wellensicherungsring
- 122: Randbereich
- 150: Drehmomentkennlinie

- 210: Seitenblech
- 214: Flansch
- 221: Sicherungsring
- 230: Schenkel

- 310: Seitenblech
- 314: Flansch
- 321: Sicherungsniet
- 330: Schenkel

- 410: Seitenblech
- 414: Flansch
- 421: Sicherungsniet
- 422: Halteblech
- 430: Schenkel

- 501: Fliehkraftpendel
- 502: Zwischenelement
- 503: Nase, Vorsprung
- 504: Flansch
- 505: Fliehgewicht
- 506: Rollenelement
- 507: Führungsbahn
- 508: Schraube
- 509: Niet

- 601: Kupplungsscheibe
- 602: Fliehkraftpendel
- 603: Abstandsbolzen
- 604: Nabenflansch

- 701: Kupplungsscheibe
- 702: Fliehkraftpendel
- 703: Abstandsbolzen

## Patentansprüche

1. Kupplungsscheibe (101) mit einem Drehschwingungsdämpfer (105) mit zwei in Reihe geschalteten Federdämpfern (102,103), mit einer Nabe (112) und darauf angeordnetem Flansch (111), wobei beiderseits des Flansches (111) Seitenscheiben (110) angeordnet sind, wobei radial außen die Seitenscheiben (110) mit Reibbelägen (108) verbunden sind, wobei ein erster Federdämpfer (102) als Hauptdämpfer zwischen den Seitenscheiben (110) und dem Flansch (111) drehmomentübertragend angeordnet ist, und ein zweiter Federdämpfer (103) als Vordämpfer zwischen dem Flansch (111) und der Nabe (112) drehmomentübertragend angeordnet ist, **dadurch gekennzeichnet, dass** die Kupplungsscheibe ein Fliehkraftpendel (104) aufweist, wobei das Fliehkraftpendel (104) zumindest einen Flansch (114) des Fliehkraftpendels und daran verlagerbar angeordnete Fliehgewichte (115) aufweist, wobei der Flansch (114) des Fliehkraftpendels (104) in Momentenrichtung betrachtet vor dem Vordämpfer an ein Element der Kupplungsscheibe (101) angelenkt ist.

2. Kupplungsscheibe nach Anspruch 1, wobei der Flansch (114) des Fliehkraftpendels (104) mit dem Flansch (111) der Nabe (112) verbunden ist.

3. Kupplungsscheibe nach Anspruch 1, wobei der Flansch (114) des Fliehkraftpendels (104) mit zumindest einer der Seitenscheiben (110) der Kupplungsscheibe (101) verbunden ist.

4. Kupplungsscheibe nach Anspruch 1, wobei eine momentrichtungsabhängige Einleitung des Pendelmomentes derart erfolgt, dass der Flansch (114) des Fliehkraftpendels (104) über Federn (107) des ersten Federdämpfers (102) im Zugbetrieb mit dem Flansch (111) der Nabe (112) gekoppelt ist, und im Schubbetrieb mit den Seitenscheiben (110) der Kupplungsscheibe (101) gekoppelt ist.

5. Kupplungsscheibe nach Anspruch 4, wobei mit dem Flansch (114) des Fliehkraftpendels (104) ein Zwischenelement (116) verbunden ist, welches Nasen (117) aufweist, die axial zwischen der Feder (107) des ersten Federdämpfers (102) und dem Flansch (111) der Nabe (112) und/oder den Seitenscheiben (110) eingreifen.

6. Kupplungsscheibe nach Anspruch 4, wobei mit dem Flansch (114) des Fliehkraftpendels (104) Nasen (117) verbunden oder einteilig ausgebildet sind, die axial zwischen der Feder (107) des Federdämpfers und dem Flansch (111) der Nabe (112) und/oder den Seitenscheiben (110) eingreifen.

7. Kupplungsscheibe nach einem der vorhergehenden Ansprüche 1 oder 4 bis 6, wobei der Flansch (114) des Fliehkraftpendels (104) auf der Nabe (112) axial gesichert, aber verdrehbar aufgenommen ist.

8. Kupplungsscheibe nach Anspruch 7, wobei der Flansch (114) des Fliehkraftpendels (104) mittels eines Sicherungsrings (221), eines Haltebolzens oder eines Halteblechs auf der Nabe (112) verdrehbar aber axial gesichert gehalten ist.

9. Kupplungsscheibe nach Anspruch 2 oder 3, wobei der Flansch (114) des Fliehkraftpendels (104) mit dem Flansch (111) der Nabe (112) oder mit zumindest einer der Seitenscheiben (110) mittels eines Abstandsbolzens (603) oder Abstandsblechs verbunden ist.

10. Kupplungsscheibe nach einem der vorhergehenden Ansprüche, wobei das Fliehkraftpendel (104) zwei beabstandete Flansche (114) und dazwischen angeordnete Fliehgewichte (115) oder einen Flansch (115) und beiderseits davon angeordnete Fliehgewichte (115) aufweist.

## Claims

1. A clutch disk (101) having a torsional vibration damper (105) that has two spring dampers (102, 103) connected in series, having a hub (112) and a flange (111) arranged on the hub, wherein side disks (110) are arranged on both sides of the flange (111), wherein the side disks (110) are connected radially on the outside to friction linings (108), wherein a first spring damper (102) is arranged as a main damper between the side disks (110) and the flange (111) in a torque-transmitting manner, and a second spring damper (103) is arranged as a pre-damper between the flange (111) and the hub (112) in a torque-transmitting manner, **characterised in that** the clutch disk has a centrifugal pendulum (104), wherein the centrifugal pendulum (104) has at least one flange (114) of the centrifugal pendulum and centrifugal weights (115) arranged displaceably thereon, wherein the flange (114) of the centrifugal pendulum (104) is hinged to an element of the clutch disk (101) upstream of the pre-damper when viewed in the direction of torque.

2. The clutch disk according to claim 1, wherein the flange (114) of the centrifugal pendulum (104) is connected to the flange (111) of the hub (112).

3. The clutch disk according to claim 1, wherein the flange (114) of the centrifugal pendulum (104) is connected to at least one of the side disks (110) of the clutch disk (101).

4. The clutch disk according to claim 1, wherein a torque-direction-dependent introduction of the pendulum torque takes place in such a way that the flange (114) of the centrifugal pendulum (104) is coupled to the flange (111) of the hub (112) via springs (107) of the first spring damper (102) in pull operation and is coupled to the side disks (110) of the clutch disk (101) in push operation.

5. The clutch disk according to claim 4, wherein the flange (114) of the centrifugal pendulum (104) is connected to an intermediate element (116) having noses (117) engaging axially between the spring (107) of the first spring damper (102) and the flange (111) of the hub (112) and/or the side disks (110).

6. The clutch disk according to claim 4, wherein noses (117) are connected to or integrally formed with the flange (114) of the centrifugal pendulum (104) and engage axially between the spring (107) of the spring damper and the flange (111) of the hub (112) and/or the side disks (110).

7. The clutch disk according to any one of the preceding claims 1 or 4 to 6, wherein the flange (114) of the centrifugal pendulum (104) is axially secured but rotatably received on the hub (112).

8. The clutch disk according to claim 7, wherein the flange (114) of the centrifugal pendulum (104) is held rotatably but axially secured on the hub (112) by means of a retaining ring (221), a retaining bolt or a retaining plate.

9. The clutch disk according to claim 2 or 3, wherein the flange (114) of the centrifugal pendulum (104) is connected to the flange (111) of the hub (112) or to at least one of the side disks (110) by means of a spacer bolt (603) or spacer plate.

10. The clutch disk according to any one of the preceding claims, wherein the centrifugal pendulum (104) has two spaced apart flanges (114) and centrifugal weights (115) arranged therebetween or one flange (115) and centrifugal weights (115) arranged on both sides thereof.

## Revendications

1. Disque d'embrayage (101) muni d'un amortisseur de vibrations de torsion (105) avec deux amortisseurs à ressort (102, 103) montés en série, avec un moyeu (112) et une bride (111) agencée dessus, des disques latéraux (110) étant agencés de part et d'autre de la bride (111), les disques latéraux (110) étant reliés à des garnitures de friction (108) radialement à l'extérieur, un premier amortisseur à ressort (102) étant agencé en tant qu'amortisseur principal entre les disques latéraux (110) et la bride (111) de façon à transmettre le couple et un second amortisseur à ressort (103) étant agencé en tant que pré-amortisseur entre la bride (111) et le moyeu (112) de façon à transmettre le couple, **caractérisé en ce que** le disque d'embrayage présente un pendule centrifuge (104), le pendule centrifuge (104) présentant au moins une bride (114) du pendule centrifuge et des masselottes (115) agencées de façon à pouvoir se déplacer dessus, la bride (114) du pendule centrifuge (104) étant articulée à un élément du disque d'embrayage (101) devant le pré-amortisseur, vu dans la direction du couple.

2. Disque d'embrayage selon la revendication 1, dans lequel la bride (114) du pendule centrifuge (104) est reliée à la bride (111) du moyeu (112).

3. Disque d'embrayage selon la revendication 1, dans lequel la bride (114) du pendule centrifuge (104) est reliée à au moins l'un des disques latéraux (110) du disque d'embrayage (101).

4. Disque d'embrayage selon la revendication 1, dans lequel une introduction du couple pendulaire en fonction de la direction du couple se produit de façon à ce que la bride (114) du pendule centrifuge (104) soit accouplée à la bride (111) du moyeu (112) par l'intermédiaire de ressorts (107) du premier amortisseur à ressort (102) en mode de traction et à ce qu'elle soit accouplée aux disques latéraux (110) du disque d'embrayage (101) en mode de poussée.

5. Disque d'embrayage selon la revendication 4, dans lequel un élément intermédiaire (116) est relié à la bride (114) du pendule centrifuge (104), lequel élément intermédiaire présente des ergots (117) qui viennent en prise axialement entre le ressort (107) du premier amortisseur à ressort (102) et la bride (111) du moyeu (112) et/ou les disques latéraux (110).

6. Disque d'embrayage selon la revendication 4, dans lequel les ergots (117) sont formés d'un seul tenant ou reliés à la bride (114) du pendule centrifuge (104) et viennent axialement en prise entre le ressort (107) de l'amortisseur à ressort et la bride (111) du moyeu (112) et/ou les disques latéraux (110).

7. Disque d'embrayage selon l'une quelconque des revendications précédentes 1 ou 4 à 6, dans lequel la bride (114) du pendule centrifuge (104) est reçue sur le moyeu (112) de manière à être bloquée axialement tout en pouvant tourner.

8. Disque d'embrayage selon la revendication 7, dans lequel la bride (114) du pendule centrifuge (104) est retenue sur le moyeu (112) de façon à pouvoir tourner mais à être bloquée axialement au moyen d'une bague de blocage (221), d'un boulon de retenue ou d'une plaque de retenue.

9. Disque d'embrayage selon la revendication 2 ou 3, dans lequel la bride (114) du pendule centrifuge (104) est reliée à la bride (111) du moyeu (112) ou à au moins l'un des disques latéraux (110) au moyen d'un boulon d'écartement (603) ou d'une plaque d'écartement.

10. Disque d'embrayage selon l'une quelconque des revendications précédentes, dans lequel le pendule centrifuge (104) comprend deux brides (114) espacées et des masselottes (115) agencées entre elles ou une bride (115) et des masselottes (115) agencées de part et d'autre de celle-ci.
